**Europäisches Patentamt**

(19) **European Patent Office**

**Office européen des brevets**

(11) Veröffentlichungsnummer: **0 296 588 B1**

(12) ## EUROPÄISCHE PATENTSCHRIFT

(45) Veröffentlichungstag der Patentschrift:
20.03.91 Patentblatt 91/12

(21) Anmeldenummer: **88110027.5**

(22) Anmeldetag: **23.06.88**

(51) Int. Cl.⁵: **G10L 5/06**

(54) **Verfahren und Schaltungsanordnung zum automatischen Wiedererkennen von Signalfolgen.**

(30) Priorität: **24.06.87 DE 3720882**

(43) Veröffentlichungstag der Anmeldung:
**28.12.88 Patentblatt 88/52**

(45) Bekanntmachung des Hinweises auf die
Patenterteilung:
**20.03.91 Patentblatt 91/12**

(84) Benannte Vertragsstaaten:
**AT BE CH DE FR GB IT LI LU NL**

(56) Entgegenhaltungen:
**US-A- 3 919 479**
**US-A- 4 450 531**
**E.D.N. ELECTRICAL DESIGN NEWS, Band 27,
Nr. 20, 13. Oktober 1982, Seiten 171-174, Boston, Massachusetts, US; J.C. ANDERSON.:
"Improved zero-crossing method enhances
digital speech"**

(73) Patentinhaber: **MEDIA
CONTROL-MUSIK-MEDIEN-ANALYSEN
GESELLSCHAFT MIT BESCHRÄNKTER
HAFTUNG
W-7890 Waldshut-Tiengen 16 (DE)**

(72) Erfinder: **Schulze, Klaus, Dr. Ing.
Ringstrasse 12
W-2412 Nusse (DE)**

(74) Vertreter: **von Bülow, Tam, Dipl.-Ing.,
Dipl.-Wirtsch.-Ing. et al
SAMSON & BÜLOW Widenmayerstrasse 5
W-8000 München 22 (DE)**

EP 0 296 588 B1

## Beschreibung

Die Erfindung bezieht sich auf ein Verfahren und eine Schaltungsanordnung zum automatischen Wiedererkennen von Signalfolgen, wie z.B. von Sprach- und/oder Musiksignalen, insbesondere zur statistischen Auswertung der Sendehäufigkeit von Musiktiteln, Werbespots oder Wortbeiträgen, nach dem Oberbegriff der Ansprüche 1 und 8.

Ein derartiges Verfahren und eine derartige Schaltungsanordnung sind aus der US-A-39 19 479 bekannt.

Diese Entgegenhaltung offenbart die Erfassung von durch den Rundfunk ausgesendeten Signalen durch automatische Erkennung der jeweils ausgesendeten Signale mittels eines Vergleiches des ausgesendeten und empfangeriden Signales mit charakteristischen Daten, die vorab für das betreffende Signal abgespeichert worden sind. Zu diesem Zweck wird zunächst das Signal, das später wiedererkannt werden soll, nichtlinear verarbeitet, was mit Hilfe einer Gleichrichterschaltung (Spalte 7, Zeile 59) bewerkstelligt wird. Das sich ergebende Signal wird zu einer Hüllkurve durch Tiefpaßfilterung weiterverarbeitet, woraufhin das Hüllkurvensignal abgetastet, digitalisiert und gespeichert wird.

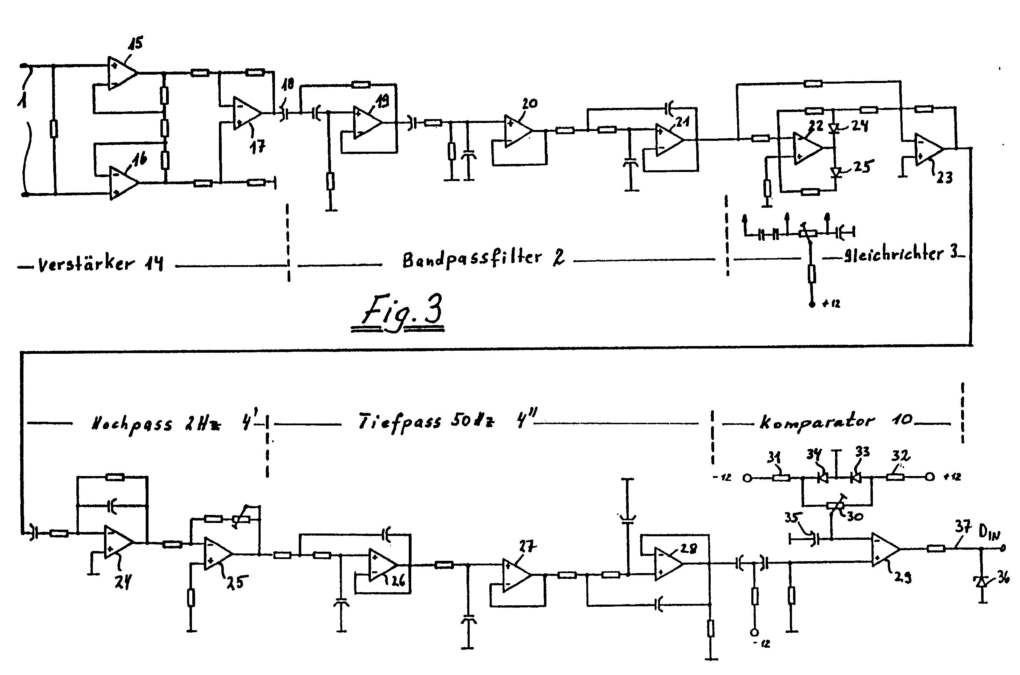

Jegliches von einem Radiosender empfangene, auf Identität mit dem Bezugssignal zu vergleichende Signal wird gleichfalls durch Gleichrichtung nichtlinear verarbeitet (Fig. 3, Bezugszeichen 32 ; Spalte 8, Zeilen 33 bis 35 in Verbindung mit Spalte 7, Zeilen 57 bis 62). Das gleichgerichtete, empfangene Signal wird zu einer Hüllkurve umgeformt (Fig. 3, Bezugszeichen 33), digitalisiert und abgetastet (Fig. 3, Bezugszeichen 34 und 45 in Verbindung mit Spalte 8, Zeilen 35 bis 38).

Der festgespeicherte Signalverlauf des Bezugssignales wird in einer Korrelationsschaltung (Fig. 3, Bezugszeichen 36) ständig mit dem sich laufend ändernden, empfangenen, gleichgerichteten, zur Hüllkurve verarbeiteten und digitalisierten Signal verglichen. Bei Übereinstimmung der Vergleichssignale erscheint am Ausgang der Korrelationsschaltung ein hohes Ausgangssignal, das Erkennung der abgespeicherten Signalfolge in der ausgesandten Signalfolge interpretiert wird (Spalte 3, Zeilen 45 bis 59).

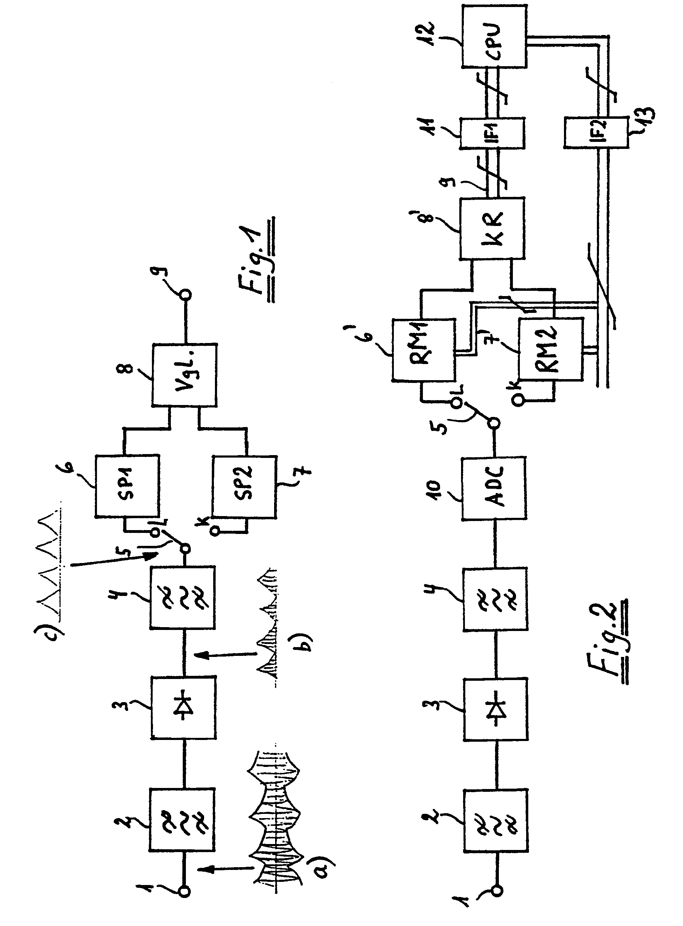

Das bekannte Verfahren und die bekannte Schaltungsanordnung erfordern die Speicherung und den laufenden Vergleich einer Vielzahl von durch Analog-Digital-Wandlung gewonnenen Digitalwerten der betreffenden Hüllkurven, wodurch pro Schaltungseinseinheit, wie sie beispielsweise in Fig. 1 gezeigt ist, nur ein einziges zu untersuchendes Signal mit einem einzigen Bezugssignal verglichen werden kann. Um eine Vielzahl von Rundfunkprogrammen zu untersuchen, wird daher in Spalte 9 dieser Entgegenhaltung vorgeschlagen, die zu untersuchenden Signale nach Digitalisierung und Abtastung mit einer Geschwindigkeit zu verarbeiten, die mehr als den Faktor Hundert über der Echtzeit liegt. Nichts-destoweniger eignet sich das bekannte Verfahren und die bekannte Schaltungsanordnung zumindest dann, wenn man den technischen Aufwand in vernünftigen Grenzen halten will, nicht zum simultanen Vergleich einer zu untersuchenden Signalfolge mit einer Vielzahl von vorgegebenen Signalfolgen.

Die US-PS 44 50 531 offenbart ein Verfahren und System für die Erkennung von Rundfunksignalen, bei dem sowohl ein Rundfunksignal als auch ein Bezugssignal nach Bandpaßfilterung, Hüllkurvenerzeugung, erneuter Bandpaßfilterung und Digitalisierung über eine sehr aufwendige Rechnerschaltung in Bezug gesetzt werden, die Fourier-Transformationsschaltungen, komplexe Multiplikationsschaltungen und eine Rücktransformationsschaltung für die Fourier-Transformation umfaßt. Diese bekannte Technologie erfordert die Verarbeitung von Signalmatrizen und begnügt sich nicht mit der aus der erstgenannten Entgegenhaltung bekannten zeitlichen Gegenüberstellung zur Feststellung einer Übereinstimmung eines Bezugssignales und eines zu untersuchenden Signales.

Die Druckschrift E.D.N. Electrical Design News, Bd. 27, Nr. 20, 13. Okt. 1982 offenbart ein Spracherkennungsverfahren mit Nulldurchgangserfassung, bei dem eine Differenzierstufe eingesetzt wird.

Gegenüber diesem Stand der Technik liegt der vorliegenden Erfindung die Aufgabe zugrunde, ein Verfahren und eine Schaltungsanordnung der eingangs genannten Art so weiterzubilden, daß bei vergleichsweise geringem schaltungsmäßigem Aufwand eine zu untersuchende Signalfolge mit einer Mehrzahl von Bezugssignalen oder vorgegebenen Signalen verglichen werden kann.

Diese Aufgabe wird bei einem Verfahren nach dem Oberbegriff des Patentanspruchs 1 durch den kennzeichnenden Teil des Patentanspruchs 1 angegebenen Merkmale und bei einer Schaltungsanordnung nach dem Oberbegriff des Patentanspruchs 8 durch die im kennzeichnenden Teil des Patentanspruchs 8 angegebenen Merkmale gelöst.

Im folgenden wird die Erfindung anhand von Ausführungsbeispielen im Zusammenhang mit der Zeichnung ausführlicher erläutert. Es zeigt :

Fig. 1 ein Prinzipschaltbild einer Schaltungsanordnung nach einem ersten Ausführungsbeispiel der Erfindung ;

Fig. 2 ein Prinzipschaltbild der Schaltungsanordnung nach einem zweiten Ausführungsbeispiel der Erfindung ;

Fig. 3 ein detailierteres Schaltbild des Signalaufbereitungsteiles der Schaltungsanordnung nach dem zweiten Ausführungsbeispiel der Erfindung und

Fig. 4 ein detailierteres Schaltbild des digitalen Vergleicherteiles der Schaltungsanordnung nach der Erfindung.

Fig. 5 bis 16 verschiedene Diagramme von Hüllkurvensignalen zur Erläuterung der Arbeitsweise der Erfindung.

Bei der Schaltungsanordnung der Fig. 1 werden Signalfolgen, die beispielsweise den in Fig. 1a dargestellten Verlauf haben, einem Eingang 1 zugeführt und von dort einem Bandpaßfilter 2, welches die Eingangssignale auf einen Bandbereich zwischen 200 Hz und 4 kHz begrenzt. Dieser Bandpaßfilter 2 dient im wesentlichen dazu, Laufzeitverzerrungen auf der Übertragungsstrecke auszugleichen. Prinzipiell könnte es auch fortgelassen werden. Man könnte statt seiner auch ein Tiefpaßfilter mit einer Grenzfrequenz von ca. 4 kHz vorsehen. In einer nachfolgenden Gleichrichterschaltung 3 wird dann ein gleichgerichtetes Hüllkurvensignal gebildet wie es beispielsweise in Fig. Ib dargestellt ist. Dieses Hüllkurvensignal wird dann einem zweiten Bankdpaßfilter 4 zugeführt, das einen Durchlaßbereich von ca. 2 Hz bis 50 Hz aufweist. Das Ausgangssignal des zweiten Bandpasses ist dann das bandbegrenzte Hüllkurvensignal. Ein Beipiel hierfür ist in Fig. 1c abgebildet. Nach einer in der Zeichnung nicht dargestellten Ausführungsform der Erfindung durchläuft das Ausgangssignal des zweiten Bandpasses noch durch einen Differenzierer, wo die zeitliche Ableitung (d/dt) gebildet wird. Der Ausgang des zweiten Bandpasses ist mit einem Umschalter 5 verbunden, der in der Betriebsart "Lernen" (L) mit einem ersten Speicher 6 verbunden ist, dessen Ausgang einem Anschluß eines Vergleichers 8 zugeführt wird. In der Betriebsart "Lernen" wird ein zeitlicher Ausschnitt des bandbegrenzten Hüllkurvensignales von ca. 1,7 sec. Länge in den Speicher 6 eingelesen.

In der Betriebsart "Vergleichen" bzw. "Korrelieren" (K) ist der Umschalter 5 in seiner anderen Stellung, so daß die bandbegrenzten Hüllkurvensignale vom Ausgang des zweiten Bandpaßfilters 4 einem zweiten Speicher 7 zugeführt werden, dessen Ausgang mit dem anderen Anschluß des Vergleichers 8 verbunden ist. Der Vergleicher 8 vergleicht dann laufend die im Speicher 7 ankommenden Signale mit den im Speicher 6 gespeicherten Signalen und gibt bei Übereinstimmung an seinem Ausgang 9 ein Übereinstimmungssignal ab.

Im Ausführungsbeispiel der Fig. 2 werden die bandbegrenzten Hüllkurvensignale des zweiten Bandpaßfilters 4 einem Analog-/Digitalwandler 10 zugeführt und dort in digitale Signale umgewandelt. Diese digitalisierten, bandbegrenzten Hüllkurvensignale werden dann in ähnlicher Weise über den Umschalter 5 in der Betriebsart "Lernen" einem ersten RAM-Speicher 6' bzw. in der Betriebsart "Korrelieren" einem zweiten RAM-Speicher 7' zugeführt. Die Ausgänge der beiden RAM-Speicher 6' bzw. 7' werden dann einer Korrelationsschaltung 8' zugeführt, an deren Ausgang 9 wiederum ein Erkennungssignal anliegt. Diese Erkennungssignal wird über einen Datenbus und eine Interface-Schaltung 11 einer zentralen Recheneinheit 12 zugeführt, welche über einen weiteren Datenbus und eine zweite Interface-Schaltung 13 die Adressierung der beiden RAM-Speicher 6' und 7' steuert. Die Zentraleinheit 12 kann über nicht weiter dargestellte Ausgabeeinheiten in verschlüsselter Form den Zeitpunkt des Auftretens eines Erkennungssignales sowie ein die erkannte Maske identifizierendes Signal ausgeben, beispielsweise an einen Drucker oder einen sonstigen Datenträger.

Der Analog-/Digital-Wandler 10 der Fig. 1 kann ein mit mehreren Bits arbeitender Wandler sein. Er kann auch ein nur mit einem Bit arbeitender Wandler sein, der dann im Prinzip nur das Vorzeichen seiner Eingangssignale bildet, also letztlich die Signumfunktion der bandbegrenzten Hüllkurvensignale.

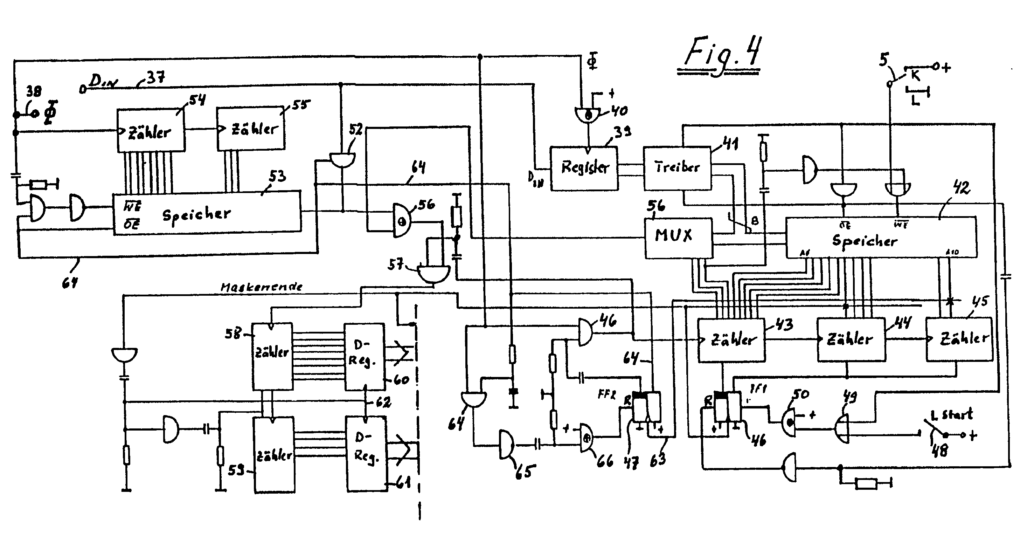

Die Fig. 3 und 4 zeigen ein konkretes Ausführungsbeispiel der Schaltungsanordnung nach Fig. 2. Die Eingangssignale werden vom Eingang 1 zunächst einem symmetrischen Eingangsverstärker 14 zugeführt, der hier aus drei rückgekoppelten Operationsverstärkern 15, 16 und 17 besteht. Über einen Entkopplungskondensator 18 gelangen dessen Ausgangssignale zu dem Bandpaßfilter 3, das in der gezeigten Weise aus drei rückgekoppelten Operationsverstärkern 19, 20 und 21 sowie deren externen Beschaltungen mit Widerständen und Kondensatoren besteht.

Der Gleichrichter 3 ist als Zweiweggleichrichter aus zwei rückgekoppelten Operationsverstärkern 22 und 23 sowie im Rückkopplungspfad des vorderen Operations-verstärkers 22 liegenden Dioden 24 und 25 sowie mit einer externen Beschaltung aus Widerständen aufgebaut.

Das nachfolgende Bandpaßfilter 4 besteht aus einer Reihenschaltung eines Hochpaßfilters 4' mit einer Grenzfrequenz von 2 Hz und einem Tiefpaßfilter 4'' mit einer Grenzfrequenz von 50 Hz. Hochpaß- und Tiefpaßfilter 4' bzw. 4'' sind ebenfalls in an sich bekannter Weise aus Operationsverstärkern 24 bis 28 und deren externer Beschaltung aufgebaut. Der nachfolgende Analog-/Digital-Wandler ist hier als Komparator 29 realisiert, dessen positivem Eingang (+) die Ausgangssignale des Tiefpasses 4'' zugeführt werden und dessen Referenzeingang (−) eine Referenzspannung von einigen mV zugeführt wird, die von einem Spannungsteiler 30 stammt, der über je einen Widerstand 31 bzw. 32 mit negativer bzw. positiver Versorgungsspannung verbunden ist. Parallel zu dem Widerstand 30 liegt eine Reihenschaltung aus zwei Dioden 33 und 34, die von positiver zu negativer Versorgungsspannung hin in Durchlaßrichtung geschaltet sind und deren gemeinsamer Verbindungspunkt auf Massepotential liegt. Durch diese Schaltung erhält man eine recht stabile Referenzspannung in der Größenordnung von einigen mV. Zur weiteren Entstörung ist der Referenzeingang des Komparators 29 noch über einen Kondensator 35 mit Masse verbunden. Der Ausgang des Komparators 29 ist mittels einer Zener-Diode 36 auf TTL-Pegel begrenzt. Da der Referenz- bzw. Schwellwert des Komparators 29 nahe 0 V liegt, arbeitet er als Vorzeichendetektor für positive Vorzeichen und bildet also die Signumfunktion seiner Eingangssignale. Da der Komparator 29 nur zwei Ausgangspegel (ein- oder ausgeschaltet) hat, kann man seine Ausgangssignale als digitale Signale ansehen. Diese Ausgangssignale $D_{IN}$ werden dann zum Digitalteil der Fig. 4 geleitet, der jetzt beschrieben wird. Bei dieser Beschreibung wird davon ausgegangen, daß 32 Masken mit je 512 Bit verarbeitet werden können. Selbstverständlich können auch andere Zahlen von Masken und andere Längen der Masken verwendet werden.

Die vom Ausgang des Komparators 29 auf einer Leitung 37 ankommenden bandbegrenzten, vorzeichencodierten Hüllkurvensignale $D_{IN}$ werden mit Taktsignalen von beispielsweise 300 Hz, die von einem nicht dargestellten Taktgeber auf einer Leitung 38 ankommen, zunächst in ein 8-Bit-Schieberegister 39 eingeschrieben, wobei dieses Schieberegister von dem Takt $\Phi$ (Leitung 38) in Verbindung mit einem Gatter 40 gesteuert wird. Von dem Schieberegister 39 gelangen die Signale $D_{IN}$ byteweise (8 Bit Länge) über einen Bustreiber 41 zu einem Speicher 42, der hier als RAM-Speicher mit 2K×8 Bit ausgelegt ist. Eine Zählerkette mit den hintereinander geschalteten Zählern 43, 44 und 45 erhält über ein UND-Gatter 46 das Taktsignal $\Phi$ und bestimmt über seine Ausgänge die Adressen des Speichers 42, unter denen die vom Bustreiber 41 ankommenden Signale abgespeichert werden. Hierzu wird der Takt $\Phi$ im Zähler 43 zunächst durch 8 geteilt und als Byte-Adresse an die Adressleitungen A0 bis A10 des Speichers 42 gelegt.

Der 1/0-Übergang bestimmter Adressleitungen steuert zwei mit negativen Flanken getriggerte JK-Flipflops 46 bzw. 47, welche wichtige Steuerfunktionen übernehmen. Bei einer Maskenlänge von 512 Bit wird bei einem 1/0-Übergang der Adressleitung A5 das erste Flipflop 46 getriggert, wenn eine Maske vollständig gespeichert ist. Dieses Flipflop wird zu Beginn der Lernphase durch eine Taste 48 ("Lern-Start") und zwei Gatter 49 und 50 gesetzt (Ausgang Q = 1 ; $\overline{Q}$ = 0) und kippt dann beim 1/0-Übergang der Adressleitung A5 zurück und löscht die Zähler 43, 44 und 45. Es können dann weitere Masken geladen werden, indem die beiden Zähler 44 und 45 über hier nicht gezeigte Leitungen auf eine Startadresse gesetzt werden. Nach jeweils weiterer 512 Takten wird wiederum über das Flipflop 46 der Vorgang gestoppt. Die mit "Maskenende" bezeichnete Leitung 51, die mit der Adressleitung A5 verbunden ist, signalisiert einer hier nicht gezeigten Zentraleinheit das Ende des Einschreibevorganges einer Maske, wodurch der Takt $\Phi$ unterbrochen wird.

Wenn alle Masken in den Speicher 42 eingelesen sind, wird der Umschalter 5 in die dargestellte Stellung "K" für Korrelieren umgeschaltet. Gleichzeitig wird der Takt $\Phi$ erhöht und zwar bei 32 Masken mit 512 Bit Länge und der Abtastfrequenz von 300 Hz auf 300 × 512 × 32 + 1 = 4,915201 MHz.

Es werden dann die vom Analogteil der Fig. 3 ankommenden auszuwertenden Signale über eine Torschaltung 52 in nachfolgend näher beschriebener Weise in einen Speicher 53 eingelesen und zwar wiederum mit der Taktrate von 300 Hz.

Während des Vergleichsvorganges werden nacheinander alle 32 Masken des Speichers 42 mit den 512 Bit des Speichers 53 verglichen, indem über zu diesen Speichern gehörende Zählerketten (43, 44, 45 zu Speicher 42 ; Zähler 54 und 55 zu Speicher 53) diese Zähler adressrichtig ausgelesen werden. Der Zähler 43 ist nur "einkanalig" belegt und enthält die letzten 512 Bit des an der Leitung 37 anliegenden Signales $D_{IN}$. Der Speicher 42 gibt seine Daten über einen Multiplexer 56, der eine Parallel-Serien-Wandlung durchführt, an einen Eingang des Vergleichers ab, der hier als Exklusiv-Oder-Gatter 56 ausgeführt ist. Dem anderen Eingang dieses Exklusiv-Oder-Gatters 56 werden die Ausgangssignale des Speichers 1 zugeführt. Bei Übereinstimmung seiner beiden Eingangssignale (also 0 und 0 oder 1 und 1) erscheint am Ausgang des Exklusiv-Oder-Gatters 56 eine "1", welche über ein Gatter 57 einer Zählerkette aus den zwei 4-Bit-Zählern 58 und 59 zugeführt wird. Jede Übereinstimmung der Signale aus den beiden Speichern 42 und 53 erhöht also den Zählerstand der Zählerkette 58, 59 um eine 1.

Nach dem Vergleich jeweils einer Maske (512 Bit) wird durch das Triggersignal (Adressleitung A5) für das Flipflop 46 (Leitung "Maskenende") der Zählerstand der Zähler 58, 59 in D-Register 60, 61 übernommen und die Zähler 58, 59 anschließend gelöscht. Die D-Register 60, 61 geben ihre Daten an einen nicht-dargestellten Rechner weiter, was ebenfalls über das Signal auf der Leitung "Maskenende" (Leitung 62) gesteuert wird.

Bei völliger Übereinstimmung von maske und Analysedaten kann der Zählerstand der Zähler 58, 59 512 betragen. Wegen der fast immer vorhandenen Abtastfehler wird der Zählerstand in der Regel niedriger sein. Die Praxis zeigt, daß bei guter Signalaufbereitung etwa 95% des maximalen Zählerstandes (also Zählerstand 486) bei Koinzidenz erreicht wird (ein Zählerstand von 256 ist der Erwartungswert bei nicht-korrelierten Signalen). Wenn alle Masken des Speichers 42 mit den aktuell im Speicher 53 gespeicherten 512 Bit verglichen sind, wird dies – je nach Anzahl der Masken – auf einem der Ausgänge der Zähler 44 bzw. 45 erkannt und über eine Leitung 63 dem Flipflop 47 gemeldet, welches umschaltet und dafür sorgt, daß ein Taktimpuls für die Zähler-

4

EP 0 296 588 B1

kette 43, 44, 45 unterdrückt wird, während die Zählerkette 54, 55 des Speichers 53 weiterschaltet und über einen Impuls auf der Leitung 64 (Ausgang des Flipflops 47) das Tor 52 für einen Taktimpuls öffnet und damit einen Abtastwert des Signales $D_{IN}$ auf der Leitung 37 in den Speicher 53 einschreibt. Dabei schaltet die Zählerkette 54, 55 auch um einen Takt weiter, so daß zwischen den Adressen der beiden Speicher eine sich alle 3,33 ms um eine 1 vergrößernde Differenz entsteht. Damit ist der Speicher 53 relativ zum Speicher 42 wie ein Schieberegister oragnisiert, welches nach einem Durchlaufen bzw. Vergleichen der 32 Masken des Speichers 42 um einen Schritt weiterschaltet.

Sobald das ein Durchlaufen aller Masken anzeigende Signal auf der Leitung 63 verschwindet, wird das Flipflop 47 über das nächste Taktsignal Φ, welches über Gatter 64, 65 und 66 zu dessen Rücksetzeingang R gelangt, wieder rückgesetzt, wodurch das Gatter 46, welches die Taktimpulse zu der Zählerkette 43, 44, 45 läßt, wieder freigegeben wird.

Kurz zusammengefaßt werden also innerhalb von ca. 3,33 ms (Abtastrate von 300 Hz) alle (32) Masken zu je 512 Bit verglichen. Das Flipflop 46 überwacht dabei die einzelne Maske (512 Bit) während das Flipflop 47 die Gesamtzahl aller (32) Masken überwacht. Je nach Anzahl der im Speicher 42 gespeicherten Masken ist der Takteingang (Leitung 63) des Flipflops 47 mit einem anderen Ausgang der Zählerkette 44, 45 verbunden.

Im beschriebenen Ausführungsbeispiel wird der Vergleich seriell mit einem Exklusiv-Oder-Gatter 56 durchgeführt. Da die Taktfrequenz für den Vergleich mit der Anzahl der Masken steigt, ist die Anzahl der Masken durch die maximale Arbeitsfrequenz der digitalen Bausteine begrenzt. Es ist daher prinzipiell auch möglich, mehrere parallel arbeitende Vergleicher einzusetzen, sei es, daß der Vergleich byteweise (8 Bit) durchgeführt wird, sei es auch, daß im Extremfall alle 512 Bits parallel in 512 parallelen EX-OR-Gattern verglichen würden. Letzteres ist allerdings sehr aufwendig, da Speicher mit 512 Ausgängen benötigt würden.

Weiterhin ist es prinzipiell möglich, mehrkanalig zu arbeiten, dergestalt, daß zwei oder mehrere Sender überwacht werden. Hierzu könnte man entweder den Speicher 53 vergrößern und derart organisieren, daß zwei verschiedene Eingangssignale $D_{IN}$ parallel bzw. zeitlich verschachtelt eingelesen und verglichen werden oder daß statt des einen Speichers 53 pro Kanal ein eigener entsprechender Speicher vorgesehen ist.

Da es bei der Wiedererkennung von Musiktiteln etc. nicht nur darauf ankommt, ob einer von den zu überwachenden (32) Musiktiteln gespielt wurde sondern auch darauf, welcher von diesen, kann gleichzeitig mit dem Korrelationsergebnis der Zählerkette 58, 59 der Zählerstand der Zählerkette 43, 44, 45 abgefragt und in die nicht dargestellte Zentraleinheit eingegeben werden. Damit ist es möglich, die aktuell erkannte Maske zu identifizieren.

Zu den Speichern 42 und 53 ist noch anzumerken, daß die mit $\overline{WE}$ bzw. $\overline{OE}$ bezeichneten Eingänge Steuereingänge sind, wobei der Eingang $\overline{WE}$ ein negierter "write enable" – Eingang ist, der das Einschreiben in den Speicher steuert, während der Eingang $\overline{OE}$ ein negierter "output enable" – Eingang ist, der das Auslesen von Daten aus dem Speicher steuert. Durch die diesen Eingängen vorgeschalteten Gatter wird in Verbindung mit dem Taktsignal Φ und dem Signal auf der Leitung 64 bezüglich des Speichers 53 bzw. durch die Stellung des Schalters 5 und das die Übertragung eines Bytes (8 Bit) aus dem Speicher 42 identifizierende Signal des Zählers 43 für den Speicher 42 überwacht, daß die beiden Speicher 42 und 53 nur zu den jeweils richtigen Zeitpunkten ausgelesen bzw. eingeschrieben werden können. Die übrigen, in der Zeichnung dargestellten, jedoch in der Beschreibung nicht ausdrücklich erwähnten Gatter bzw. deren externe Beschaltungen dienen ebenfalls der richtigen Funktion der Ablaufsteuerung, wobei deren Funktion dem Fachmanne ohne weiteres ersichtlich ist bzw. sich beim Aufbau der dargestellten Schaltung von selbst einstellt.

Die folgenden Erläuterungen betreffen den die Differentiation der Hüllkurve umfassenden Erfindungsaspekt, durch den eine Signalvorverarbeitung im Analogbereich bewirkt wird.

Es ist üblich, die zeitlichen Schwankungen der Tonsignale als Modulation eines multispektralen Trägers o(t) mit dem Schwankungssignal e(t) aufzufassen. Dieses Schwankungssignal stellt sich dann als Einhüllende, Hüllkurve oder Envelope des Tonsignals dar und läßt sich durch einfache Hüllkurvengleichrichtung wieder zurückgewinnen. Dieses Hüllkurvensignal ist auf den Spektralbereich von 0 Hz bis 50 Hz begrenzt.

Messungen haben ergeben, daß diese Hüllkurvensignale im Bereich von 0 Hz bis etwa 3 Hz eine konstante Leistungsdichte aufweisen, die dann zu höheren Frequenzen mit etwa 26 dB/dek abfällt. In guter Näherung läßt sich der gemessene Spektralverlauf durch die Übertragungsfunktion eines Tiefpasses 1. Ordnung darstellen.

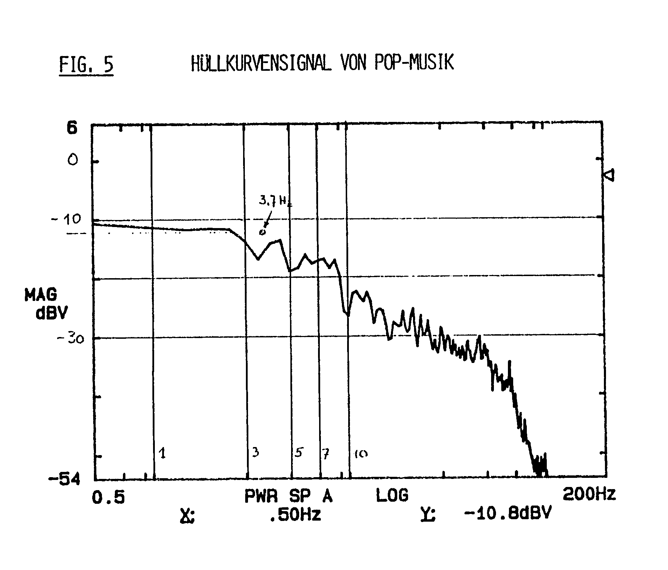

Natürlich gibt es eine Vielzahl verschiedener Spektralverläufe der Leistungsdichten ; so ist z.B. die Leistungsdichte bei klassischer Chormusik gelegentlich nahezu gleichverteilt und ähnelt damit in spektraler Sicht dem weißen Rauschen. In Fig. 5 ist als Beispiel die Leistungsdichte der Hüllkurve eines POP-Titels dargestellt; diese Kurve ergibt sich als Mittelung von 32 FFT-Analysen, die einen Signalausschnitt von ca. 15 sec. repräsentieren. Man erkennt in Fig. 5 oberhalb von 50 Hz den raschen Abfall des Spektrums, der auf den Tiefpaß hinter der Hüllkurvengleichrichtung zurückzuführen ist. Die Begrenzung des Hüllkurvenspektrums erfolgt offensichtlich willkürlich, erfaßt jedoch den weitaus größten Teil der Hüllkurvenleistung und hat in der praktischen

5

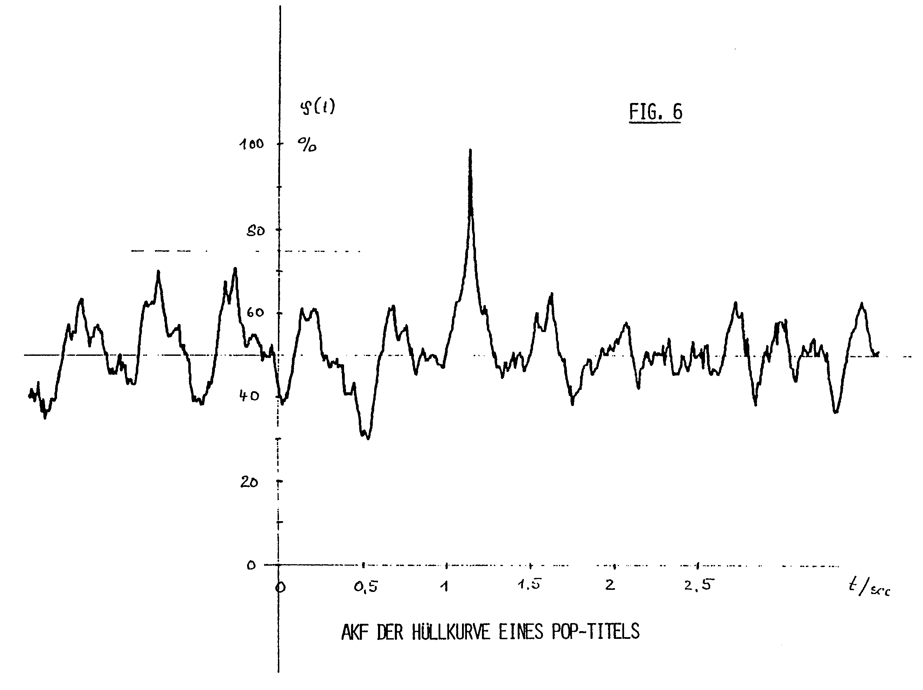

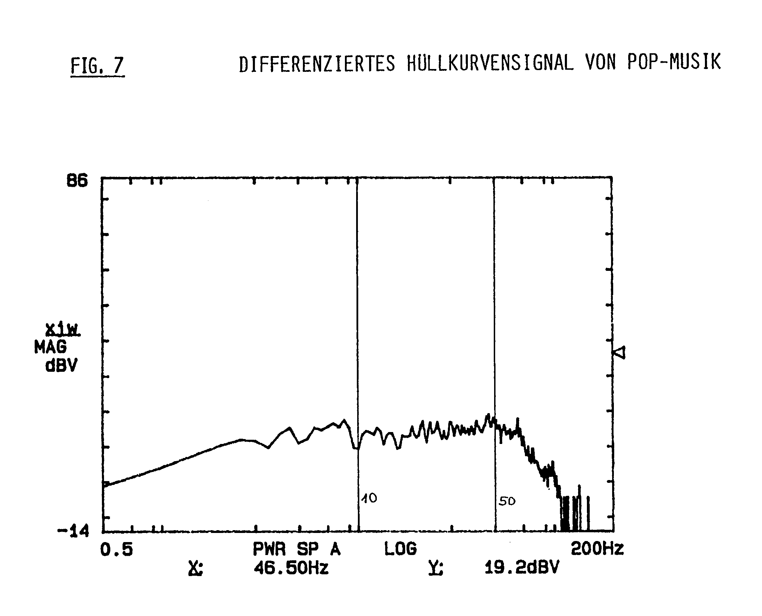

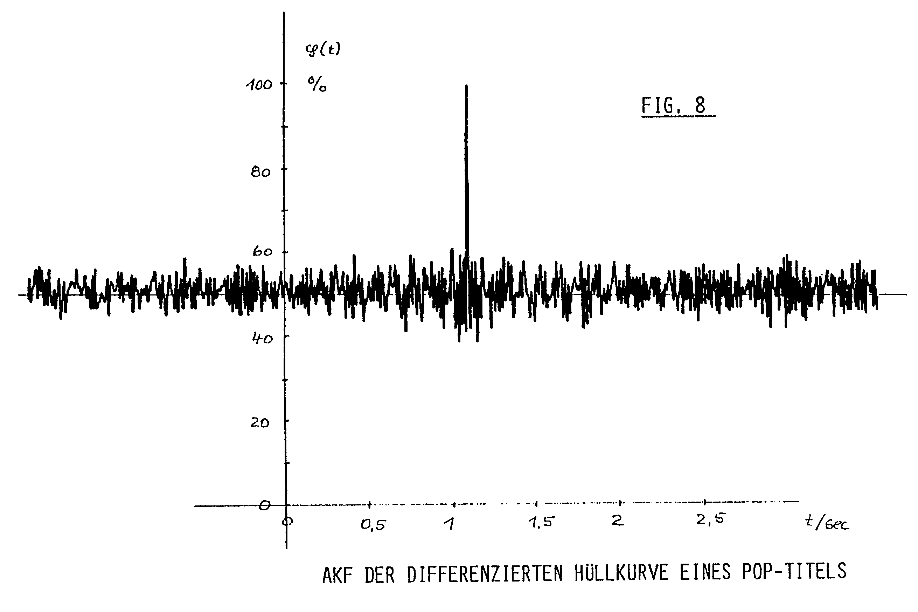

Arbeit bislang nicht zu Nachteilen geführt. Weiterhin ist Fig. 5 zu entnehmen, daß der Spektralanteil hoher Leistung offenbar durch den Rhythmus eines Musiksinglas gegeben ist. Im Beispiel von Fig. 5 ist es die Basedrum, die etwa mit einer Frequenz von 2 Hz angeregt wird. Wie auch immer der Rhythmus erzeugt wird, er ist ein periodisches und damit redundantes Signal und führt zu einer periodischen Autokorrelationsfunktion (AKF). In Fig. 6 ist die AKF des zu Fig. 5 gehörigen Signals dargestellt, und man erkennt deutlich die durch den Rhythmus bewirkte Periodizität. Obwohl die Stelle höchster Korrelation, die bei Identität mit dem Vergleichssignal entsteht, eindeutig hervortritt, sind die periodischen Teilkorrelationen doch so groß, daß hier eine Fehlerkennung möglich ist. In Fig. 6 scheint jedes Nebenmaximum in der Feinstruktur unterschiedlich von dem anderen, so daß man die Merkmale für die individuelle Ausgestaltung jedes Vergleichssignals (Referenzmuster oder Maske) in den Signalanteilen höherer Hüllkurvenfrequenz suchen muß, die mit geringerer Leistung vorhanden sind. Daraus folgt, daß bei besonderer Beachtung der hohen Hüllkurvenfrequenzen das Referenzmuster wirklich zu einem Unikat wird, was sich dann in der AKF auch auswirkt. Zu diesem Zweck wird das durch den Tiefpaß bandbegrenzte Hüllkurvensignal differenziert, was einer Multiplikation der Spektralfunktion mit jω entspricht. Nach dieser Manipulation ergibt sich die spektrale Leistungsdichte nach Fig. 7, und ein Vergleich mit Fig. 5 läßt deutlich den Zusammenhang erkennen. Die zu dem differenzierten Hüllkurvensignal gehörende AKF zeigt Fig. 8. Hier ist die Periodizität fast ganz verschwunden und der Bereich hoher Korrelation (Signalidentität) ist praktisch auf einen Zeitpunkt geschrumpft. Der Gewinn dieser Maßnahme ist unverkennbar der Abbau der Teilkorrelation, wodurch die Erkennung eindeutig wird.

Die in den vier Bildern erkennbaren Zusammenhänge sind auch theoretisch ohne viel Mathematik nachvollziehbar.

Das Spektrum aus Fig. 5 läßt sich in guter Näherung durch die Gleichung

$$A(f) = \frac{1}{1+j2\pi\tau f} \quad (1)$$

darstellen, wobei $\tau$ der zur 3dB-Frequenz gehörenden Zeitkonstante entspricht. Da nun die AKF die Fouriertransformierte des Leistungsspektrums ist, ergibt sich nach Quadrieren und Transformation in den Zeitbereich der Doppelexponentialimpuls.

$$AKF : \quad \varphi(t) = \frac{2}{2\tau} \cdot \exp\{-|t|/\tau\} \quad (2)$$

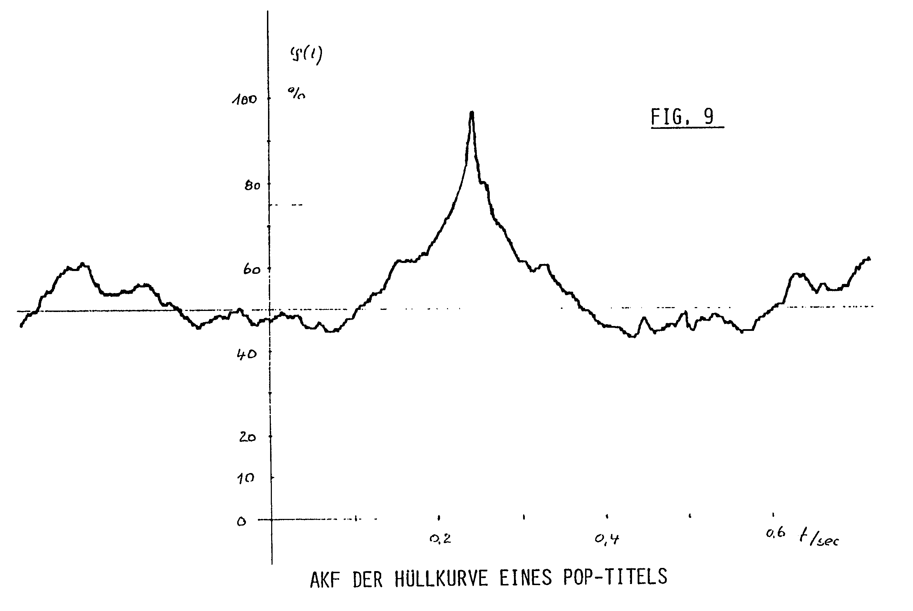

Um diese Beziehung auch quantitativ zu prüfen, ist in Fig. 9 die AKF aus Fig. 6 mit gedehnter Abszisse gezeichnet worden, und durch Ausmessen der Halbwertsbreite B des deutlich erkennbaren Exponentialimpulses ergibt sich eine Grenzfrequenz von 4,4 Hz, was sich größenordnungsmäßig aus Fig. 5 bestätigen läßt. Durch die Differentiation des Hüllkurvensignales ergibt sich eine Spektralfunktion, die angenähert durch die Gleichung

$$A'(f) = rect \left\{\frac{f}{2fg}\right\} \quad (3)$$

beschrieben werden kann. Die Fouriertransformation führt dann auf die AKF

$$\varphi(t) = si\{2\pi fgt\} \cdot \quad (4)$$

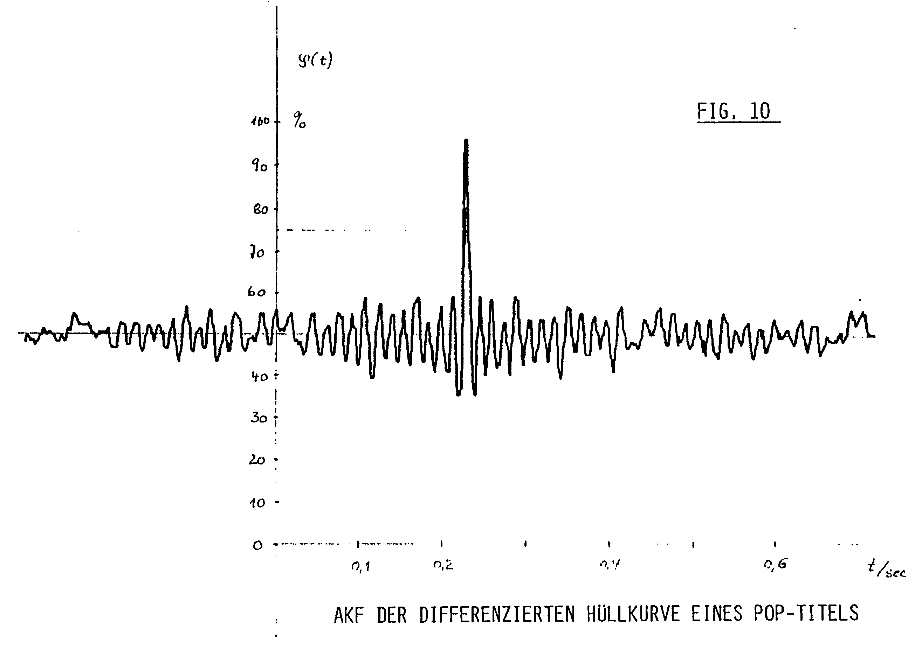

Auch hier gibt eine quantitative Auswertung des in Fig. 10 gedehnt dargestellten Verlaufes aus Fig. 8 eine durchaus akzeptable Grenzfrequenz von $fg = 60$ Hz (siehe Fig. 8).

Es ist damit gezeigt worden, daß die auch als "prewhitening" – Filter bezeichnete Differentiation des Hüllkurvensignals eine bessere Ausnutzung des Informationsgehaltes der Hüllkurve bewirkt. Nachteilig könnte sich die höhere Empfindlichkeit gegenüber Verzerrungen auswirken ; hier liegen noch keine Erfahrungen vor. Aber selbst wenn das der Fall sein sollte, kann eine "milde" Differentiation, d. h. Differenzieren bis zu einer Frequenz von etwa 30 Hz, eine merkliche Steigerung der Erkennungssicherheit bringen.

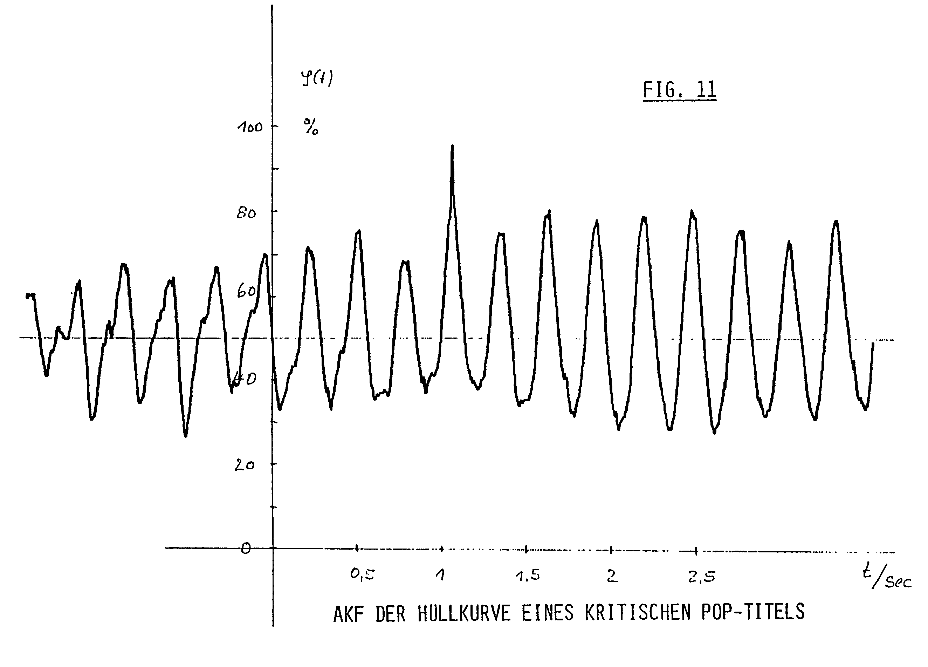

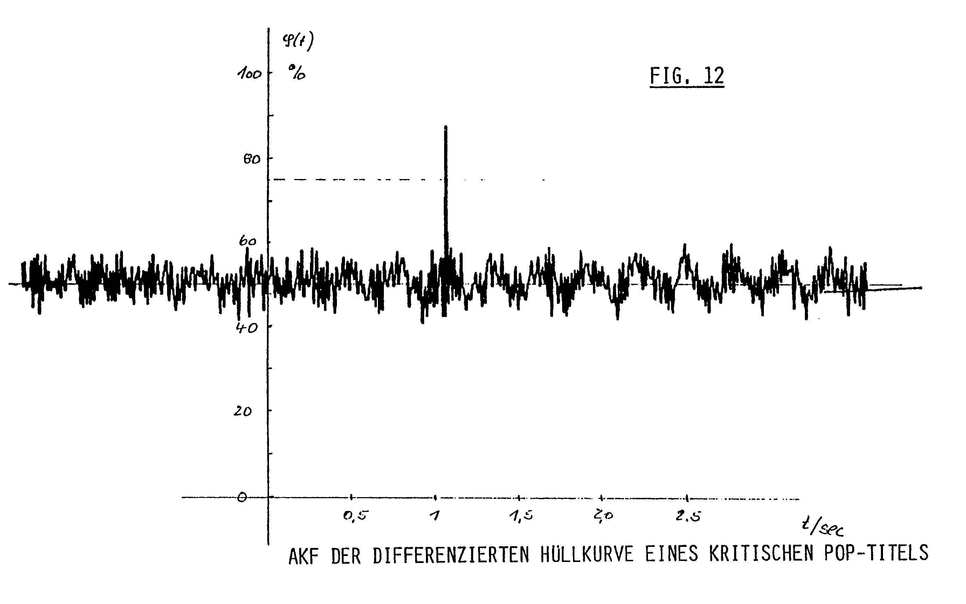

Der Vorteil der Differentiation soll nocmals an einem "kritischen" POP-Titel gezeigt werden, bei dem, wie die AKF in Fig. 11 zeigt, periodisch eine Erkennung zu verzeichnen war. Die Differentiation führte zur AKF in Fig. 12, und hier wurde eindeutig nur das Referenzmuster erkannt (Identität).

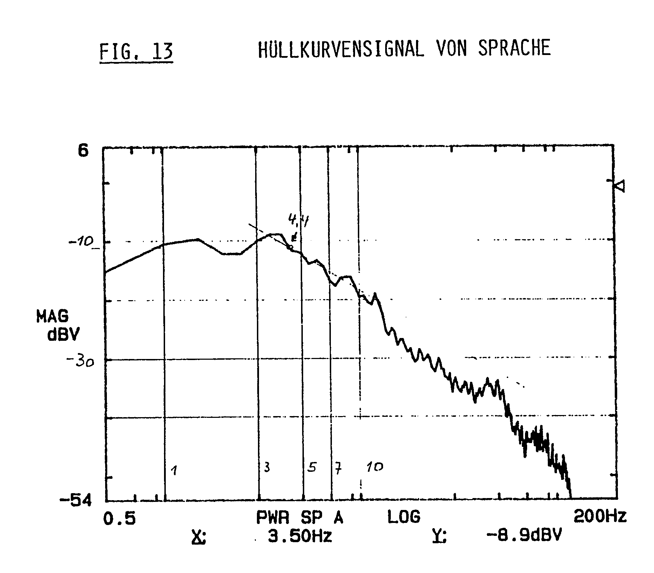

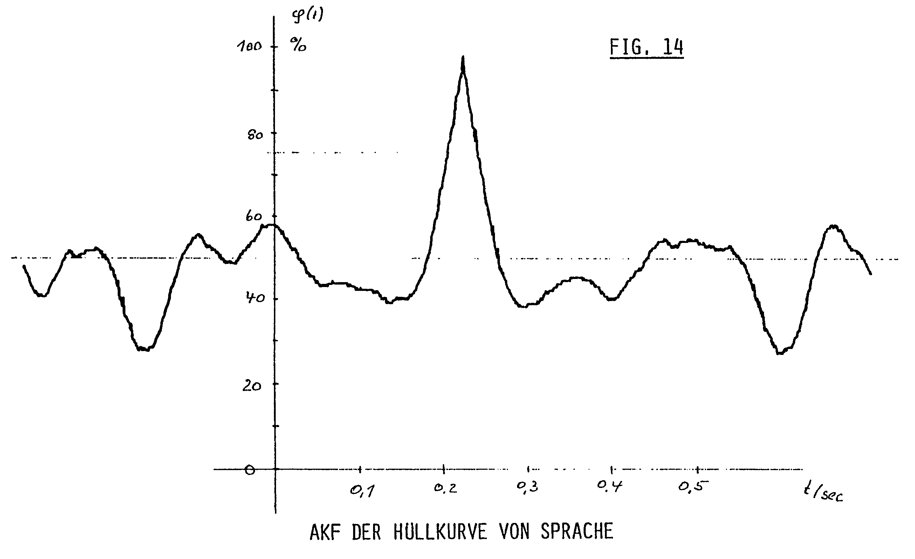

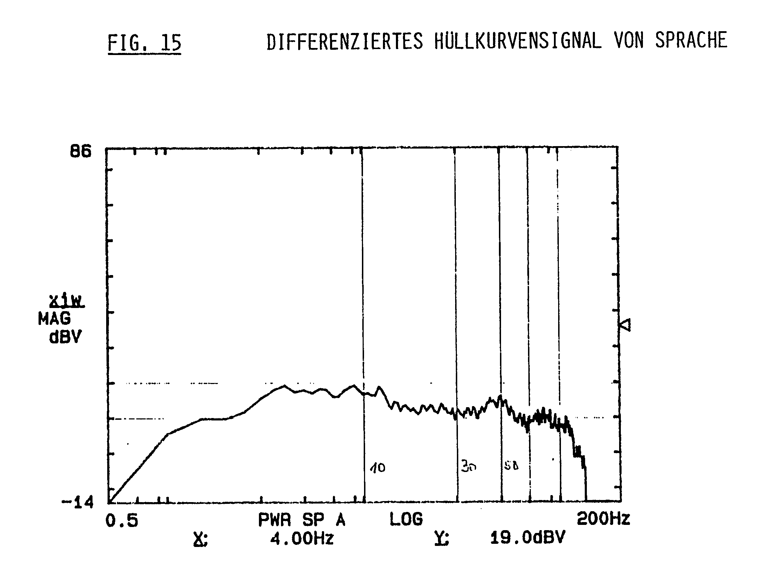

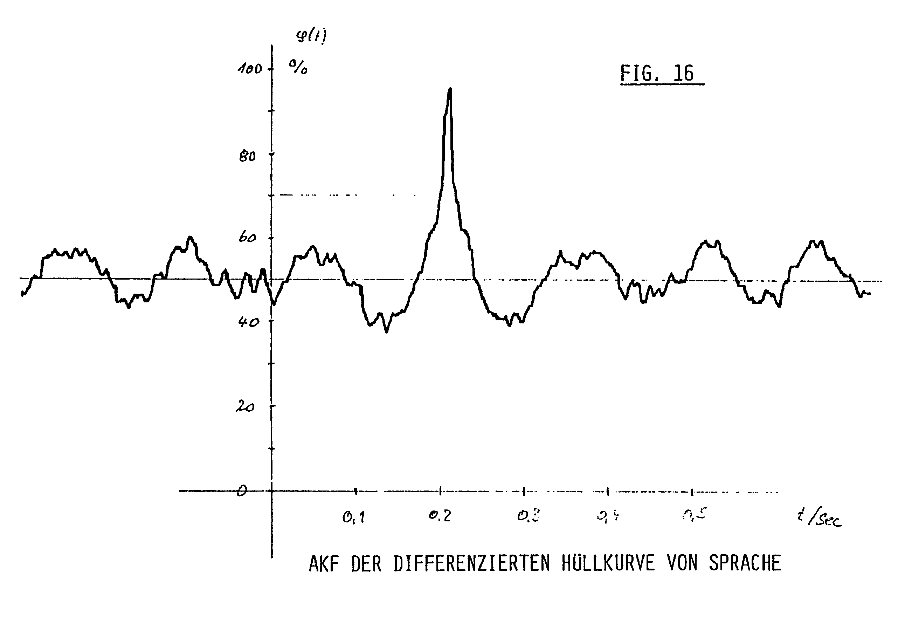

Es gibt Fälle, bei denen der Gewinn durch Differentiation nicht groß ist ; hierfür sei ein Sprachbeispiel angeführt. Die Fig. 13 bis 16 zeigen der Reihe nach das undifferenzierte Hüllkurvenspektrum und in Fig. 14 die dazugehörige AKF, Fig. 15 und Fig. 16 stellen den jeweils differenzierten Fall dar. Man erkennt prinzipiell die schon besprochenen Eigenschaften : das Korrelationsmaximum ist im differenzierten Fall schmaler, die Teilkorrelationen sind jedoch unverändert. Bei der Erkennung gibt es jedoch keine Probleme. Es ist schwierig, die Zusammenhänge mathematisch abzuschätzen, da hier offensichtlich kompliziertere Verteilungsformen vorliegen. Nach den vorliegenden Messungen scheinen die letzten Bilder typisch für Sprachsignale zu sein, bei denen der Gewinn weniger spektakulär ist. Es hat bislang bei Sprachsignalen jedoch keine Erkennungsschwierigkeiten gegeben.

**Ansprüche**

1. Verfahren zum automatischen Wiederkennen von Signalfolgen, wie z.B. von Sprach- und/oder Musiksignalen, insbesondere zur statistischen Auswertung der Sendehäufigkeit von Musiktiteln, Werbespots oder Wortbeiträgen, bei dem
   - von vorgegebenen Signalfolgen (z.B. Musiktiteln) je ein frequenzbegrenztes Hüllkurvensignal gebildet wird und zeitliche Abschnitte dieser Hüllkurvensignale gespeichert werden,
   - von zu untersuchenden Signalfolgen ebenfalls frequenzbegrenzte Hüllkurvensignale gebildet werden,
   - zeitliche Abschnitte der Hüllkurvensignale der zu untersuchenden Signalfolgen laufend mit den gespeicherten Abschnitten der Hüllkurvensignale der vorgegebenen Signalfolgen verglichen werden, und
   - bei Überschreiten eines vorgegebenen Grades der Übereinstimmung ein Erkennungssignal erzeugt wird, dadurch gekennzeichnet,
   - daß alle Hüllkurvensignale differenziert werden,
   - daß die differenzierten Hüllkurvensignale durch Ermitteln der jeweiligen Vorzeichen der differenzierten Hüllkurvensignale zu digitalen, pegelnormierten, vorzeichencodierten Hüllkurvensignalen (Signumfunktion) umgeformt werden,
   - daß die vorzeichencodierten Hüllkurvensignale mit einer relativ niedrigen Abtastrate abgetastet und zwischengespeichert werden,
   - daß die zwischengespeicherten, abgetasteten Hüllkurvensignale der zu untersuchenden Signale mit allen vorzeichencodierten Hüllkurvensignalen der vorgegebenen Signalfolgen mit einer Vergleichsfrequenz verglichen werden, die zumindest ebenso groß ist wie das Produkt der Abtastrate mal der Anzahl der vorgegebenen Signalfolgen (Musiktitel) mal der Anzahl der pro vorgegebener Signalfolge gespeicherten Bits, und
   - daß in einem Zeitraum zwischen dem Eintreffen zweier aufeinanderfolgender vorzeichencodierter Hüllkurvensignale der zu untersuchenden Signale die bisher eingetroffenen abgetasteten, zwischengespeicherten Hüllkurvensignale mit allen gespeicherten vorzeichencodierten Hüllkurvensignalen verglichen werden.

2. Verfahren nach Anspruch 1, dadurch gekennzeichnet, daß alle Hüllkurvensignale auf einen engen, niedrigen Frequenzbereich (z.B. 2 Hz bis 50 Hz) begrenzt werden.

3. Verfahren nach Anspruch 1 oder 2, dadurch gekennzeichnet, daß alle frequenzbegrenzten Hüllkurvensignale nur in einem vorgegebenen Frequenzbereich (z.B. bis ca. 30 Hz) differenziert werden.

4. Verfahren nach einem der Ansprüche 1 bis 3, dadurch gekennzeichnet, daß die Abtastrate ca. 300 Hz beträgt.

5. Verfahren nach einem der Ansprüche 1 bis 4, dadurch gekennzeichnet, daß pro vorgegebener Signalfolge 512 Bits gespeichert werden.

6. Verfahren nach einem der Ansprüche 1 bis 5, dadurch gekennzeichnet, daß der Vergleich der Hüllkurvensignale als digitale Korrelation durchgeführt wird und daß eine zu untersuchende Signalfolge dann als übereinstimmend mit einer der gespeicherten Signalfolgen definiert wird, wenn die Korrelation feinen vorgegebenen Grad der Übereinstimmung (z.B. 95%) ergibt.

7. Verfahren nach einem der Ansprüche 1 bis 6, dadurch gekennzeichnet, daß die vorgegebenen und die zu untersuchenden Signalfolgen vor der Hüllkurvenbildung auf einen engen Frequenzbereich (z.B. 200 Hz bis 4 kHz) bandbegrenzt werden.

8. Schaltungsanordnung zum automatischen Wiedererkennen von Signalfolgen, wie z.B. von Sprach- und/ oder Musiksignalen, insbesondere zur statistischen Auswertung der Sendehäufigkeit von Musiktiteln, Werbespots oder Wortbeiträgen, mit
   - einer Gleichrichterschaltung (3) und einer Bandpaßfilterschaltung zur Bildung eines frequenzbegrenzten Hüllkurvensignales der Sprach- und/oder Musiksignale,
   - einem ersten Speicher (6), in welchem zeitliche Abschnitte der Hüllkurvensignale von vorgegebenen Signalfolgen (Musiktiteln) gespeichert werden,

– einem zweiten Speicher (7), in welchem zeitliche Abschnitte des Hüllkurvensignales einer zu untersuchenden Signalfolge gespeichert werden, und

– einem Vergleicher (8), der laufend den jeweiligen Inhalt des zweiten Speichers (7) mit dem Inhalt des ersten Speichers (6) vergleicht und bei Überschreiten eines vorgegebenen Grades der Übereinstimmung ein Erkennungssignal erzeugt, dadurch gekennzeichnet, daß

– dem Bandfilter ein Differenzierer nachgeschaltet ist,

– dem Differenzierer ein Komparator (29) nachgeschaltet ist, dessen Referenzwert auf wenige mV eingestellt ist, so daß das Ausgangssignal des Komparators die Signumfunktion der Ausgangssignale des Bandpaßfilters (4) bildet,

– die Konparatorausgangssignale mit einer relativ niedrigen Abtastrate abgetastet und in die jeweiligen Speicher (6 bzw. 7) eingeschrieben werden,

– die Speicherinhalte mit einer Vergleichstaktfrequenz dem Vergleicher (8) zugeführt werden, die zumindest ebenso grob ist wie das Produkt der Abtastrate mal der Anzahl der vorgegebenen Signalfolgen (z.B. Musiktitel) mal der Anzahl der pro vorgegebener Signalfolge in dem ersten Speicher (6) gespeicherten Bits, und

– die Schaltungsanordnung so ausgebildet ist, daß in einem Zeitraum zwischen dem Eintreffen zweier aufeinanderfolgender vorzeichencodierter Hüllkurvensignale der zu untersuchenden Signale die bisher eingetroffenen abgetasteten, zwischengespeicherten Hüllkurvensignale mit allen gespeicherten vorzeichencodierten Hüllkurvensignalen verglichen werden.

9. Schaltungsanordnung nach Anspruch 8, dadurch gekennzeichnet, daß die Speicher adressierbare Speicher mit wahlfreiem Zugriff (RAM-Speicher 42, 53) sind, die von Zählerketten (43, 44, 45 bzw. 54, 55) angesteuert werden, wobei die Zählerketten von einem Taktgeber (Taktfrequenz 0) angesteuert werden, der zwei umschaltbare Taktfrequenzen erzeugt, wobei die eine Taktfrequenz der niedrigen Abtastrate (von ca.a 300 Hz) entspricht, während die andere Taktfrequenz die Taktfrequenz des Vergleiches ist.

10. Schaltungsanordnung nach Anspruch 9, dadurch gekennzeichnet, daß die Zählerkette (43, 44, 45) für den ersten Speicher (42) während des Vergleichens überwacht, ob die für einen zu überwachenden Musiktitel (Maske) gespeicherten Bits ausgelesen sind (Flipflop 46) und weiterhin, ob alle gespeicherten "Masken" ausgelesen sind (Flipflop 47) und daß diese Zählerkette (43, 44, 45) nach Auslesen aller im Speicher (42) gespeicherten Masken rückgesetzt und für einen Zähltakt unterbrochen bzw. gesperrt wird, so daß die Zählerkette (43, 44, 45) für den ersten Speicher (42) nach jedem vollständigen Durchlaufen aller Masken jeweils eine Zählerstanddifferenz von "eins" gegenüber der Zählerkette (54, 55) für den zweiten Zähler (53) aufweist, und daß während der Zählpause für die Zählerkette (43, 44, 45) für den ersten Speicher (42) ein neuer Abtastwert des zu untersuchenden Signales in den zweiten Speicher (53) eingelesen wird.

11. Schaltungsanordnung nach einem der Ansprüche 8 bis 10, dadurch gekennzeichnet, daß der Vergleicher ein Exklusiv-Oder-Gatter (56) ist, dem die jeweiligen Daten aus den Speichern (42, 53) seriell zugeführt werden.

12. Schaltungsanordnung nach Anspruch 11, dadurch gekennzeichnet, daß dem Vergleicher (56) ein Zähler (58, 59) nachgeschaltet ist, der nach jeder Übereinstimmung der zu vergleichenden Bits um eine "eins" weiterschaltet.

13. Schaltungsanordnung nach einem der Ansprüche 8 bis 12, dadurch gekennzeichnet, daß der Gleichrichterschaltung (3) ein Bandpaßfilter (2) vorgeschaltet ist, dessen Durchlaßbereich zwischen ca. 200 Hz und 400 kHz liegt.

14. Schaltungsanordnung nach einem der Ansprüche 8 bis 13, dadurch gekennzeichnet, daß der Gleichrichterschaltung (3) ein Bandpaßfilter mit einem engen, niedrigen Frequenzbereich (z.B. 2 Hz bis 50 Hz) nachgeschaltet ist.

## Claims

1. A method for the automatic recognition of signal sequences, such as of speech and/or music signals, in particular for the statistical evaluation of the frequency of occurrence in transmission of music titles, commercials or verbal contributions, in which

– a limited-frequency envelope curve signal is formed from each given signal sequence (e.g. music title) and temporal sections of these envelope curve signals are stored,

– likewise limited-frequency envelope curve signals are formed from signal sequences to be investigated,

– temporal sections of the envelope curve signals of the signal sequences to be investigated are continuously compared with the stored sections of the envelope curve signals of the given signal sequences, and

– when a given degree of conformity is exceeded, a recognition signal is generated, characterised

– in that all envelope curve signals are differentiated,
– in that the differentiated envelope curve signals are converted into digital, level-normalized, sign-coded envelope curve signals (signum function) by determining the respective signs of the differentiated envelope curve signals,
– in that the sign-coded envelope curve signals are sampled at a relatively low sampling rate and temporarily stored,
– in that the temporarily stored, sampled envelope curve signals of the signals to be investigated are compared with all the sign-coded envelope curve signals of the given signal sequences at a comparison frequency which is at least as high as the product of the sampling rate times the number of the given signal sequences (music titles) times the number of bits stored per given signal sequence, and
– in that, in a period between the arrival of two successive sign-coded envelope curve signals of the signals to be investigated, the sampled, temporarily stored envelope curve signals, which have arrived hitherto, are compared with all the stored sign-coded envelope curve signals.

2. A method according to Claim 1, characterised in that all the envelope curve signals are limited to a narrow low frequency range (e.g. 2 Hz to 50 Hz).

3. A method according to Claim 1 or 2, characterised in that all the limited-frequency envelope curve signals are only differentiated within a given frequency range (e.g. up to approx. 30 Hz).

4. A method according to any one of Claims 1 to 3, characterised in that the sampling rate is approx. 300 Hz.

5. A method according to any one of Claims 1 to 4, characterised in that 512 bits are stored per given signal sequence.

6. A method according to any one of Claims 1 to 5, characterised in that the comparison of the envelope curve signals is carried out as a digital correlation and in that a signal sequence to be investigated is then defined as being in conformity with one of the stored signal sequences if the correlation produces a precise given degree of conformity (e.g. 95%).

7. A method according to any one of Claims 1 to 6, characterised in that the given signal sequences and the signal sequences to be investigated are band-limited to a narrow frequency range (e.g. 200 Hz to 4 kHz) before envelope curve formation.

8. A circuit arrangement for the automatic recognition of signal sequences, such as of speech and/or music signals, in particular for the statistical evaluation of the frequency of occurrence in transmission of music titles, commercials or commentaries, with
– a rectifier circuit (3) and a band-pass filter circuit for the formation of a limited-frequency envelope curve signal of the speech and/or music signals,
– a first memory (6) in which temporal sections of the envelope curve signals of given signal sequences (music titles) are stored,
– a second memory (7) in which temporal sections of the envelope curve signal of a signal sequence to be investigated are stored, and
– a comparator (8) which continuously compares the respective content of the second memory (7) with the content of the first memory (6) and generates a recognition signal when a given degree of conformity is exceeded, characterised
– in that a differentiator is connected after the band-pass filter,
– in that a comparator (29) is connected after the differentiator, the reference value of which comparator is set at a few mV, in such a manner that the output signal of the comparator forms the signum function of the output signals of the band-pass filter (4),
– in that the comparator output signals are sampled at a relatively low sampling rate and are written into the respective memories (6 or 7),
– in that the memory contents are fed to the comparator (8) at a comparison pulse frequency which is at least as high as the product of the sampling rate times the number of the given signal sequences (e.g. music titles) times the number of bits stored in the first memory (6) per given signal sequence, and
– in that the circuit arrangement is constructed in such a manner that, in a period between the arrival of two successive sign-coded envelope curve signals of the signals to be investigated, the sampled, temporarily stored envelope curve signals, which have arrived hitherto, are compared with all the stored sign-coded envelope curve signals.

9. A circuit arrangement according to Claim 8, characterised in that the memories are addressable memories with random access (RAM memories 42, 53) which are driven by counter chains (43, 44, 45 and/or 54, 55), the counter chains being driven by a pulse generator (pulse frequency 0) which generates two pulse frequencies which can be switched over, the one pulse frequency corresponding to the low sampling rate (from approx. a 300 Hz), whilst the other pulse frequency is the pulse frequency of comparison.

10. A circuit arrangement according to Claim 9, characterised in that, during comparison, the counter chain (43, 44, 45) monitors for the first memory (42) whether the bits stored for a music title (mask), to be monitored, are read out (flip-flop 46) and furthermore, whether all the stored "masks" are read out (flip-flop 47) and in that this counter chain (43, 44, 45) is reset after reading out all the masks stored in the memory (42) and is interrupted and/or locked during one counting cycle, in such a manner that the counter chain (43, 44, 45) for the first memory (42) has, after each complete passage through of all the masks, a count difference of "one" compared with the counter chain (54, 55) for the second counter (53), and in that, during the counting interval for the counter chain (43, 44, 45) for the first memory (42), a new sampling value of the signal to be investigated is read into the second memory (53).

11. A circuit arrangement according to any one of Claims 8 to 10, characterised in that the comparator is an exclusive OR gate (56) to which the respective data from the memories (42, 53) are fed in series.

12. A circuit arrangement according to Claim 11, characterised in that a counter (58, 59) is connected after the comparator (56), which counter transfers by a "one" after each conformity of the bits to be compared.

13. A circuit arrangement according to any one of Claims 8 to 12, characterised in that band-pass filter (2) is connected before the rectifier circuit (3), the pass range of which band-pass filter is between approx. 200 Hz and 400 kHz.

14. A circuit arrangement according to any one of Claims 8 to 13, characterised in that a band-pass filter with a narrow low frequency range (e.g. 2 Hz to 50 Hz) is connected after the rectifier circuit (3).

## Revendications

1. Procédé pour la reconnaissance automatique de suites de signaux, tels que, par exemple, des signaux de parole et/ou de musique, notamment pour l'exploitation statistique de la fréquence d'émission de titres de musique, de spots publicitaires ou d'interventions parlées, au cours duquel :
   - on réalise à partir de suites données de signaux (par exemple des titres de musique) un signal de courbe enveloppe limité en fréquence et dont des coupures dans le temps de ces signaux de courbe enveloppe sont mémorisées ;
   - on réalise à partir de suites de signaux à examiner des signaux de courbe enveloppe limités en fréquence ;
   - on compare en permanence des coupures dans le temps des signaux de courbe enveloppe des suites de signaux à examiner aux coupures des signaux de courbe enveloppe mémorisés des suites de signaux données ; et
   - on produit un signal de reconnaissance lors du dépassement d'un seuil déterminé de coïncidence, caractérisé en ce que :
   - tous les signaux de la courbe enveloppe subissent une différentiation ;
   - les signaux de courbe enveloppe, après différentiation, sont transformés, par détermination du signe respectif des signaux de courbe enveloppe différenciés, en signaux digitaux, à niveau normalisé et à signe codé (fonction de signe) ;
   - les signaux de courbe enveloppe à signe codé sont explorés avec une cadence ou fréquence relativement faible et mémorisés temporairement ;
   - les signaux de courbe enveloppe, analysés et mémorisés temporairement relatifs aux signaux à examiner, sont comparés, à une fréquence de comparaison, à tous les signaux de courbe enveloppe à signe codé des suites de signaux données, la fréquence de comparaison étant au moins aussi grande que le produit de la cadence ou fréquence d'analyse par le nombre de suites données de signaux (titres de musique), lui-même multiplié par le nombre de bits mémorisés pour chaque suite donnée de signaux ;
   - au cours de la période comprise entre l'arrivée de deux signaux de courbe enveloppe successifs à signe codé relatifs aux signaux à examiner, les signaux de courbe enveloppe qui sont arrivés jusqu'à ce moment et ont été explorés et mémorisés entretemps sont comparés à tous les signaux de courbe enveloppe à signe codé mémorisé.

2. Procédé selon la revendication 1, caractérisé en ce que tous les signaux de courbe enveloppe sont limités à une gamme de fréquences étroite et basse (par exemple 2 Hz à 50 Hz).

3. Procédé selon la revendication 1 ou 2, caractérisé en ce que tous les signaux de courbe enveloppe limités en fréquence ne sont différenciés que dans une gamme donnée de fréquences (par exemple jusqu'à environ 30 Hz).

4. Procédé selon l'une des revendications 1 à 3, caractérisé en ce que la cadence ou fréquence d'exploration est de 300 Hz.

5. Procédé selon l'une des revendications 1 à 4, caractérisé en ce que 512 bits sont mémorisés par suite donnée de signaux.

6. Procédé selon l'une des revendications 1 à 5, caractérisé en ce que la comparaison des signaux de courbe enveloppe est exécutée sous forme de corrélation numérique et en ce qu'une suite de signaux à examiner est ensuite définie comme étant concordante avec une des suites de signaux mémorisées si la corrélation met en évidence un seuil précis prédéterminé de concordance (par exemple 95%).

7. Procédé selon l'une des revendications 1 à 6, caractérisé en ce que les suites de signaux données et celles à examiner sont limitées à une étroite bande de fréquences (par exemple 200 Hz jusqu'à 4 kHz) avant la formation de la courbe enveloppe.

8. Disposition de circuits pour la reconnaissance automatique de suites de signaux, tels que, par exemple des signaux vocaux et/ou musicaux, notamment pour l'exploitation statistique de la fréquence d'émission de titres de musique, de spots publicitaires ou d'interventions parlées, comprenant :
   – un circuit redresseur (3) et un circuit de filtrage à bande passante pour la formation d'un signal de courbe enveloppe limité en fréquence des signaux vocaux et/ou musicaux ;
   – une première mémoire (6) dans laquelle sont mémorisées des coupures au cours du temps des signaux de courbe enveloppe de suites données de signaux (titres de musique) ;
   – une deuxième mémoire (7) dans laquelle sont mémorisées des coupures faites au cours du temps du signal de courbe enveloppe d'une suite de signaux à examiner ;
   – un comparateur (8) qui compare en permanence le contenu respectif de la deuxième mémoire (7) au contenu de la première (6) et qui donne un signal de reconnaissance lors du dépassement d'un seuil prédéterminé de concordance, caractérisé en ce que :
   – un circuit de différentiation est monté en aval du filtre à bande ;
   – un comparateur (29) est monté en aval du circuit de différentiation, dont la valeur de référence est réglée sur quelques mV, de telle sorte que le signal de sortie du comparateur constitue la fonction de signe du signal de sortie du filtre à bande passante (4).

9. Disposition de circuits selon la revendication 8, caractérisée en ce que les mémoires sont des mémoires adressables à choix libre, ou mémoires vives, facultatif (mémoires RAM 42, 53), qui sont commandées par des chaînes de compteurs (43, 44, 45 ou 54, 55), lesquelles chaînes de compteurs sont commandées par un générateur d'impulsions (fréquence d'impulsions 0) qui produit deux fréquences d'impulsions commutables, dont l'une correspond à la basse fréquence d'exploration (d'environ 300 Hz), tandis que l'autre est la fréquence des impulsions de comparaison.

10. Disposition de circuits selon la revendication 9, caractérisée en ce que la chaîne de compteurs (43, 44, 45) de la première mémoire (42) surveille pendant la comparaison si les bits mémorisés pour surveiller un titre de musique (masque) sont lus (bascule 46) et, en outre si tous les "masques mémorisés" sortent de la mémoire par lecture (bascule 47), et en ce que cette chaîne de compteurs (43, 44, 45) est remise à zéro après lecture de tous les "masques" stockés en mémoire et est interrompue ou bloquée par une impulsion de comptage, de telle sorte que la chaîne de compteurs (43, 44, 45) présente, pour la première mémoire (42), après chaque passage de tous les masques, une différence de "un" dans l'état des compteurs, par rapport à la chaîne de compteurs (54, 55) pour le deuxième compteur (53) et en ce que, pendant la pause de comptage de la chaîne de comptage (43, 44, 45) pour la première mémoire (42), une nouvelle valeur d'exploration du signal à examiner est mémorisée dans la deuxième mémoire (53).

11. Disposition de circuits selon l'une des revendications 8 à 10, caractérisée en ce que le comparateur est une entrée de type "OU Exclusif" (56) à laquelle les données différentes sont amenées en série depuis les mémoires (42, 53).

12. Disposition de circuits selon la revendication 11, caractérisée en ce qu'un compteur (58, 59) est monté en aval d'un comparateur (56) et progresse de "un" après chaque concordance des bits à comparer.

13. Disposition de circuits selon l'une des revendications 8 à 12, caractérisée en ce qu'un filtre à bande passante (2) est monté en amont du circuit redresseur (3), la bande passante étant comprise entre environ 200 et 400 KHz.

14. Disposition de circuits selon l'une des revendications 8 à 10, caractérisée en ce qu'un filtre à bande passante à bande de fréquences basse et étroite (par exemple 2 Hz à 50 Hz) est monté en aval du circuit redresseur (3) :
   – les signaux de sortie du comparateur sont explorés avec une cadence d'analyse ou exploration relativement basse et enregistrés dans les mémoires correspondantes (6 ou 7) ;
   – les contenus des mémoires sont amenés au comparateur (8) avec une fréquence d'impulsions de comparaison qui est au moins aussi grande que le produit de la cadence ou fréquence d'exploration par le nombre de suites de signaux donnés (par exemple titres de musique), lui-même multiplié par le nombre de bits mémorisés dans la première mémoire (6) pour chaque suite donnée de signaux ; et en ce que
   – la disposition des circuits est constituée de telle sorte qu'au cours d'une période comprise entre l'arrivée de deux signaux de courbe enveloppe successifs à signe codé relatifs aux signaux à examiner, les signaux de courbe enveloppe qui sont arrivés jusqu'à ce moment et ont été explorés et mémorisés entretemps sont comparés à tous les signaux de courbe enveloppe à signe codé mémorisé.

Fig.1

Fig.2

EP 0 296 588 B1

—Verstärker 14 — | — Bandpassfilter 2 — | —Gleichrichter 3—

15  16  17  18  19  20  21  22  24  25  23

+12

## Fig.3

— Hochpass 2Hz 4' — | — Tiefpass 50Hz 4" — | — Komparator 10 —

24  25  26  27  28  29  30  31  32  33  34  35  36  37 D$_{IN}$

-12  +12  -12

Fig. 4

FIG. 5    HÜLLKURVENSIGNAL VON POP-MUSIK

FIG. 6

$\mathcal{G}(t)$ %

AKF DER HÜLLKURVE EINES POP-TITELS

$t/sec$

# FIG. 7

DIFFERENZIERTES HÜLLKURVENSIGNAL VON POP-MUSIK

FIG. 8

AKF DER DIFFERENZIERTEN HÜLLKURVE EINES POP-TITELS

EP 0 296 588 B1

FIG. 9

AKF DER HÜLLKURVE EINES POP-TITELS

FIG. 10

$\varphi(t)$

AKF DER DIFFERENZIERTEN HÜLLKURVE EINES POP-TITELS

EP 0 296 588 B1

FIG. 11

AKF DER HÜLLKURVE EINES KRITISCHEN POP-TITELS

FIG. 12

AKF DER DIFFERENZIERTEN HÜLLKURVE EINES KRITISCHEN POP-TITELS

FIG. 13    HÜLLKURVENSIGNAL VON SPRACHE

FIG. 14

AKF DER HÜLLKURVE VON SPRACHE

EP 0 296 588 B1

FIG. 15    DIFFERENZIERTES HÜLLKURVENSIGNAL VON SPRACHE

FIG. 16

AKF DER DIFFERENZIERTEN HÜLLKURVE VON SPRACHE

EP 0 296 588 B1